# EUROPÄISCHE PATENTSCHRIFT

(11) **EP 0 850 166 B1**
(45) Veröffentlichungstag und Bekanntmachung des Hinweises auf die Patenterteilung: **13.02.2002**
(21) Anmeldenummer: 96932494.6
(22) Anmeldetag: 11.09.1996
(51) Int. Cl.: B60T 11/232, B60T 11/236

(54) **GEBERZYLINDER**
MASTER CYLINDER
MAITRE-CYLINDRE

(30) Priorität: 29.09.1995 DE 19536334
(43) Veröffentlichungstag der Anmeldung: 01.07.1998
(73) Patentinhaber: Continental Teves AG & Co. oHG, 60488 Frankfurt (DE)
(72) Erfinder: WURL, Gerhard, D-63110 Rodgau (DE); JUNGMANN, Udo, D-64546 Mörfelden (DE); KÖNIG, Harald, D-61239 Ober-Mörlen (DE); KREH, Heinrich, D-61197 Florstadt (DE)
(86) Internationale Anmeldenummer: EP9603979
(87) Internationale Veröffentlichungsnummer: WO9712792

(56) Entgegenhaltungen:
- FR-A- 2 327 896
- GB-A- 2 266 752
- US-A- 5 187 934

## Beschreibung

Die vorliegende Erfindung befaßt sich mit einem Geberzylinder, insbesondere für eine hydraulische Kraftfahrzeugbremsanlage nach dem Oberbegriff des Anspruchs 1.

Ein derartiger Geberzylinder ist beispielsweise aus der US 5,187,934 bekannt. Zur Sicherstellung des Druckausgleichs zwischen Druckraum und Nachlaufraum sowie der Nachsaugefunktion aus dem Nachlaufraum in den Druckraum sind bei dem bekannten Geberzylinder in den als Plunger ausgebildeten Kolben Druckausgleichsöffnungen vorgesehen, die als Bohrungen ausgebildet sind. Diese Bohrungen sind sowohl für den Druckausgleich als auch zur Sicherstellung des Nachsaugevorganges beim Entlüften der Bremsanlage ausreichend. Soll der Geberzylinder allerdings für Bremsanlagen mit Antriebsschlupfregelung, Regelung der Fahrdynamik oder sonstigen fremdbetätigbaren Bremsanlagen verwendet werden, reichen eine kleinere Anzahl von Bohrungen nicht aus, um den von der Pumpe des Bremssystems benötigten Flüssigkeitsstrom gewährleisten zu können. Durch den kleinen Querschnitt der Bohrungen wird ein zu großer Drosselwiderstand erzeugt, der bewirkt, daß das im fremdgesteuerten Bremsmodus (z. B. Antriebsschlupfregelung oder Fahrdynamikregelung) benötigte Flüssigkeitsvolumen nicht schnell genug bereitgestellt werden kann. Die Anordnung einer größeren Anzahl von Bohrungen erhöht die Herstellungskosten und ist somit unwirtschaftlich.

Aufgabe der vorliegenden Erfindung ist es, das zum Stand der Technik genannte Problem zu lösen ohne die Fertigungskosten unangemessen in die Höhe zu treiben.

Erfindungsgemäß werden daher anstatt der Ausgleichsbohrungen im Kolben mehrere in Umfangsrichtung verlaufende Schlitze vorgesehen. Diese Schlitze haben den Vorteil, daß sie gegenüber den Bohrungen einen größeren Querschnitt bei gleichzeitig kleinerer axialer Ausdehnung aufweisen, was der Vermeidung von zu großem Verschleiß des Dichtelements, insbesondere der inneren Dichtlippe einer Dichtmanschette dient. Weiterhin ermöglichen die Schlitze einen ausreichenden Volumenstrom zur Pumpe des geregelten Bremssystems. Des weiteren wird mit der geringen Breite der Schlitze dem Bestreben nach möglichst kleinen Leerwegen in besonderer Weise Rechnung getragen.

Eine vorteilhafte Ausgestaltung der vorliegenden Erfindung liegt darin, die Schlitze im Nutgrund einer umlaufenden Nut anzuordnen. Auf diese Weise wird auch ohne eine sorgfältige Entgratung sichergestellt, daß an den Schlitzen keine scharfen Kanten auftreten, die beim Einstechen der Schlitze entstehen und zur Beschädigung der Dichtelemente führen könnten. Insbesondere ist vorgesehen, die umlaufende Nut mit flachen Flanken zu versehen, was ebenfalls einer Beschädigung der Dichtelemente beim Überfahren entgegenwirkt.

Die Schlitze können durch verschiedene Fertigungsverfahren wie Fräsen, beispielsweise Scheibenfräsen, Sägen oder durch exzentrisches Innen- oder Außendrehen eingebracht werden. Prinzipiell ist bei Kolben aus feuerfestem Werkstoff, beispielsweise Stahl, bei dem eine dünnere Wandstärke möglich ist, auch ein Stanzen der Schlitze denkbar. Eine runde Begrenzungslinie zwischen Steg und Schlitz tritt bei ein-oder mehrfach radialem Fräsen oder auch bei durch exzentrisches Drehen erzeugten Schlitzen auf. Entsprechende gerade Begrenzungslinien können durch einfaches, zweifaches oder mehrfaches durchlaufendes Fräsen erzeugt werden.

Der erfindungsgemäße Kolben kann vorteilhafterweise aus Metall oder aus Kunststoff bestehen.

Weitere Vorteile der vorliegenden Erfindung ergeben sich aus der nachfolgenden Beschreibung anhand der Figuren.

Dabei zeigen:
- Fig. 1: einen erfindungsgemäßen Geberzylinder im Längsschnitt
- Fig. 2: einen Kolben eines erfindungsgemäßen Geberzylinders im Querschnitt auf der Höhe der Nachlaufschlitze
- Fig. 3 bis 5: weitere Kolben entsprechend Fig. 2.

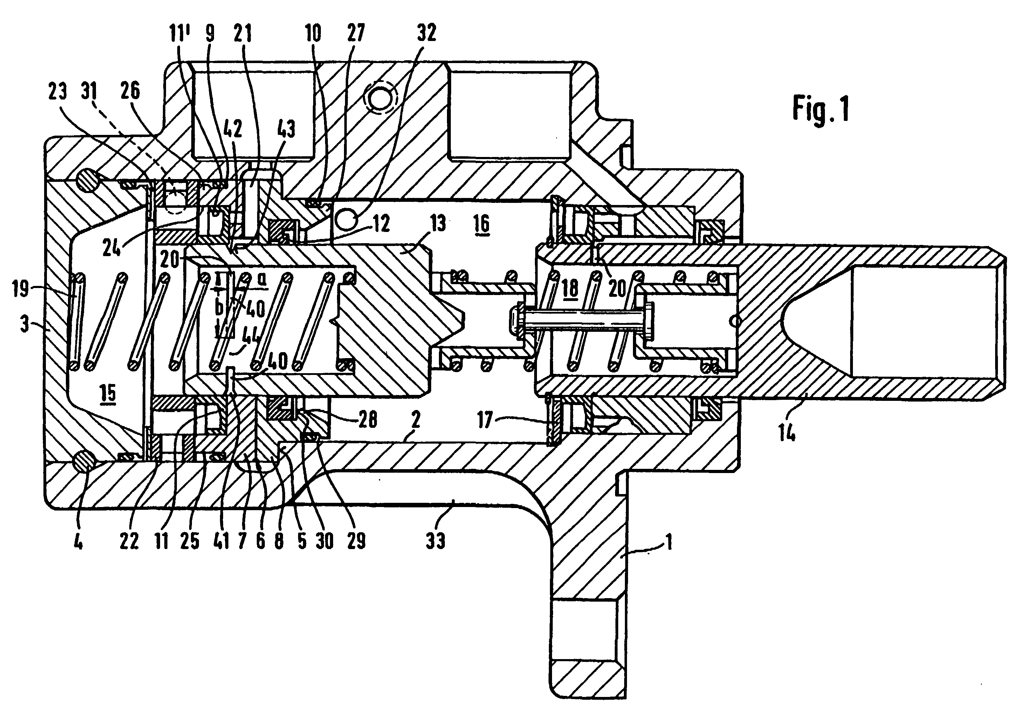

Fig. 1 zeigt einen Geberzylinder, in dessen Gehäuse 1 eine gestufte Bohrung 2 angeordnet ist, die von einem Deckel 3 verschlossen ist. Der Deckel 3 ist mittels eines Drahts 4 unlösbar mit dem Gehäuse 1 verbunden.

An einer Stufe 5 der Bohrung 2 liegt ein Führungselement 6 an, welches im vorliegenden Ausführungsbeispiel aus zwei Teilelementen 7,8 besteht. Die Teilelemente 7,8 sind mittels je eines Bohrungsdichtelements 9,10 gegen die Bohrung 2 und mittels je eines Dichtelements 11,12 gegen einen Kolben 13 abgedichtet. Der Kolben 13 begrenzt einerseits einen sich in der Bohrung 2 bis zum Deckel 3 erstreckenden Druckraum 15 und andererseits einen Primärdruckraum 16, der sich in der Bohrung 2 in entgegengesetzter Richtung erstreckt und andererseits von einem Primärkolben 14 begrenzt wird. Der Primärkolben 14 ist ebenfalls abgedichtet im Gehäuse 1 geführt und weist einen gehäusefesten Anschlag 17 auf.

Zwischen Primärkolben 14 und Kolben 13 ist ein an sich bekanntes Federpaket 18 angeordnet, welches die Kolben 13,14 in der unbetätigten Stellung des Geberzylinders im Zusammenwirken mit einer zwischen dem Kolben 13 und dem Deckel 3 angeordneten Feder 19 in ihre Ausgangsstellung bringt.

Im Kolben 13 sind Nachlaufkanäle 20 in Form von Schlitzen 40 ausgebildet. Die Schlitze 40 verlaufen in einer Ebene senkrecht zur Achse des Kolbens 13 bzw. der Bohrung 2. Ihre axiale Ausdehnung a ist wesentlich kleiner als ihre Breite b in Umfangsrichtung. Die Schlitze 40 münden an der Außenseite des Kolbens 13 in eine umlaufende Nut 41. Dabei schließen sich zu beiden Seiten des Nutgrundes 42, in den die Schlitze 40 münden, schräge Flanken 43 an. Die Flanken 43 sind in der Abbildung übertrieben steil dargestellt (oberer Teil des Kolbens 13), während sie tatsächlich in einem flachen Winkel zur Außenoberfläche des Kolbens 13 ausgebildet sind. Dies verhindert eine mögliche Beschädigung des Dichtelements 11 bei einer Vorwärts- bzw. Rückwärtsbewegung des Kolbens 13. Zwischen den Schlitzen 40 verbinden Stege 44 den vorderen Teil des Kolbens 13 mit dessen hinterem Teil.

Die Nachlaufkanäle 20 verbinden den Druckraum 15 im zurückgestellten Zustand des Kolbens 13 mit einem im Führungselement 6 ausgebildeten Nachlaufraum 21. Der Nachlaufraum 21 ist mit einem nicht dargestellten drucklosen Nachlaufbehälter verbunden. Zwischen dem Führungselement 6 und dem Deckel 3 sind ein Ringelement 22 sowie ein Federelement 23 angeordnet. Im Primärkolben 14 sind statt der Nachlaufschlitze 40 Bohrungen als Nachlaufkanäle 20 ausgebildet. Selbstverständlich können auch hier Nachlaufschlitze vorgesehen sein. Die Druckräume 15,16 sind über Druckanschlüsse 31,32 mit nicht dargestellten Radbremszylindern eines Kraftfahrzeugs verbunden. Ein axialer Steg 33 dient zur Stabilisierung des Gehäuses 1.

Zur Betätigung des Geberzylinders wird der Primärkolben 14 aus seiner dargestellten Ruheposition - in der Abbildung nach links - verschoben. Diese Bewegung wird durch das Federpaket 18 auf den Kolben 13 übertragen, welcher sich ebenfalls nach links bewegt. Dabei wird die umlaufende Nut 41 vom Dichtelement 11 bedeckt, wodurch die Druckmittelverbindung zwischen Druckraum 15 und Nachlaufraum 21 unterbrochen wird. Jede weitere Verschiebung des Kolbens 13 nach links hat eine Druckerhöhung im Druckraum 15 zur Folge, Druckmittel wird über den Druckanschluß 31 zu den Radbremsen befördert.

Zum Druckabbau wird der Primärkolben 14 nach rechts bewegt, was eine entsprechende Rückwärtsbewegung des Kolbens 13 zur Folge hat. Sobald sich der Kolben 13 in seiner dargestellten zurückgestellten Position befindet, besteht wieder eine Verbindung zwischen Druckraum 15 und Nachlaufraum 21. Ein eventuell vorhandener Überdruck im Druckraum 15 wird dadurch abgebaut, daß Druckmittel durch die Schlitze 40 und den Nachlaufraum 21 in den drucklosen Behälter abfließt. Sollte sich bei Beendigung des Betätigungsvorgangs ein gewisser Unterdruck im Druckraum 15 befinden, der ein vollständiges Zurücksetzen des Kolbens 13 in seine Ausgangsstellung behindert, so kann die äußere Dichtlippe 11' des Dichtelements nach links umklappen und so ein Nachsaugen von Druckmittel aus dem Nachlaufraum 21 in den Druckraum 15 ermöglichen, auch dann, wenn die Schlitze 40 noch durch das Dichtelement 11 abgedichtet sind. Der endgültige Druckausgleich erfolgt dann über die geöffneten Schlitze im Kolben.

Ist der erfindungsgemäße Geberzylinder in eine elektronisch geregelte Bremsanlage eingebaut, z. B. eine ABS/ASR-Anlage oder eine andere, selbsttätig Bremsvorgänge durchführende Anlage, beispielsweise eine Anlage zur Regelung der Fahrstabilität, der Fahrzeuggeschwindigkeit, des Abstands zum vorherfahrenden Fahrzeug oder ähnlichem, so kann es, je nach Auslegung der Anlage, erforderlich sein, daß Druckmittel aus dem Nachlaufbehälter über den Nachlaufraum 21 und die Nachlaufkanäle 20 in den Druckraum 15 und von diesem über die Druckanschlüsse 31 zu einem Verbraucher, beispielsweise einer Pumpe, nachgesaugt werden muß. Um hier ein möglichst großes Volumen in kurzer Zeit und ohne großen Widerstand fördern zu können, sind die Nachlaufkanäle 20 als Schlitze 40 ausgebildet. Sie haben einen großen Querschnitt und dennoch eine geringe axiale Ausdehnung a. Die geringe axiale Ausdehnung a bewirkt, daß der Leerweg des Kolbens 13, d.h. der Weg, den der Kolben 13 zurücklegen muß, um die Verbindung zwischen Druckraum 15 und Nachlaufraum 21 zu unterbrechen, dennoch sehr klein gewählt werden kann.

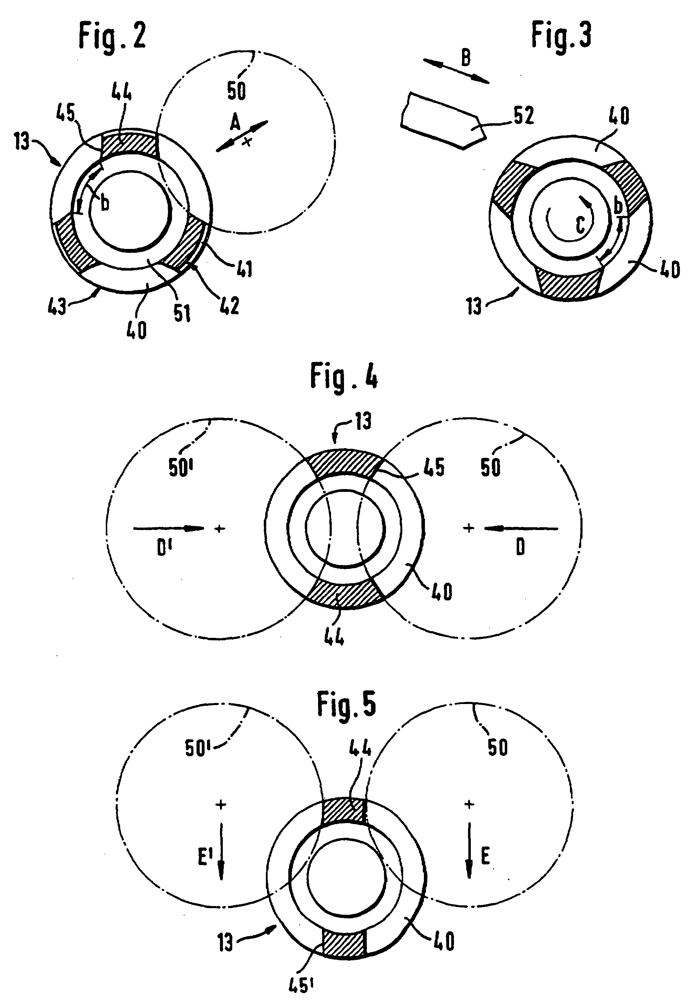

Fig. 2 zeigt einen Kolben 13 in einem Schnitt senkrecht zur Achse der Bohrung 2 auf der Höhe der Schlitze 40. Die Schlitze 40 sind durch radiales Heranfahren einer Frässcheibe 50 entsprechend Pfeil A entstanden. Sie weisen daher eine runde Begrenzungslinie 45 zu den Stegen 44 auf. Im Ausführungsbeispiel sind drei Stege 44 und drei Schlitze 40 vorgesehen, die jeweils gleiche Abmessungen aufweisen, es sind aber durchaus auch eine größere bzw. kleinere Anzahl von Schlitzen und Stegen möglich. Insbesondere ist es denkbar, einen ersten, in Umfangsrichung kurz ausgedehnten und einen weiteren, in Umfangsrichtung lang ausgedehnten Schlitz 40 vorzusehen.

Man erkennt in der Abbildung die umlaufende Nut 41, in deren Nutgrund 42 die Schlitze 40 münden, sowie die sich an die Schlitze 40 anschließenden flachen Flanken 43. Weiterhin ist eine umlaufende Ringnut 51 am inneren Boden des Kolbens 13 erkennbar, die zur Aufnahme der hier nicht dargestellten Feder 19 dient.

Fig. 3 zeigt einen Schnitt entsprechend Fig. 2 durch einen weiteren Kolben 13, dessen Schlitze 40 durch exzentrisches Drehen hergestellt werden. Dazu wird ein Drehstahl 52 entsprechend dem Pfeil B auf den sich entsprechend Pfeil C drehenden Kolben 13 zu- und wieder wegbewegt. Dabei werden die Schlitze 40 erzeugt. Die Breite b der Schlitze 40 in Umfangsrichtung hängt ab von der Drehzahl des Kolbens 13 sowie der Vorschubfrequenz des Drehstahls 52. D. h. während einer Umdrehung des Kolbens 13 wird der Drehstahl zwei-oder dreimal axial zugestellt und erzeugt so die Schlitze 40 im Kolben 13.

In Fig. 3 ist die Ausdehnung b der Schlitze 40 in Umfangsrichtung an deren engster Stelle dargestellt.

In Fig. 4 ist ein Kolben 13 mit zwei radial gefrästen Schlitzen 40 abgebildet. Dabei werden zwei Frässcheiben 50,50' entsprechend der Pfeile D,D' radial auf den Kolben zu- und wieder weggefahren, wobei die Stege 44 mit runden Begrenzungslinien 45 verbleiben.

Fig. 5 zeigt einen Kolben 13 mit zwei durchlaufend gefrästen Schlitzen 40. Dazu werden zwei Frässcheiben 50,50' entsprechend der Pfeile E,E' parallel verschoben, wodurch Stege 44 mit geraden Begrenzungslinien 45' verbleiben. Entsprechende Schlitze 40 können auch durch feststehend angeordnete rotierende Frässcheiben 50 erzeugt werden, durch die der Kolben 13 durchlaufend verschoben wird.

Erfindungsgemäß sind somit zur Sicherstellung eines Druckausgleichs sowie der Nachsaugefunktion eines Geberzylinders Nachsaugekanäle vorgesehen, die als Schlitze 40 ausgebildet sind. Diese Schlitze 40 sind für den Druckausgleich sowie zur Sicherstellung des Nachsaugevorganges beim Entlüften der Bremsanlage ausreichend. Bedingt durch ihren großen Querschnitt ermöglichen sie einen großen Flüssigkeitsstrom, der beispielsweise bei selbsttätig einen Bremsvorgang auslösenden Bremsanlagen zur Versorgung von deren Pumpe erforderlich ist. Die erfindungsgemäßen Schlitze 40 stellen nur einen geringen Drosselwiderstand dar, so daß das im Fall einer automatischen Bremsung (Antriebsschlupfregelung bzw. Fahrstabilitätsregelung o. ä.) erforderliche Flüssigkeitsvolumen schnell genug bereitgestellt werden kann. Die Schlitze 40 haben den Vorteil, daß sie gegenüber herkömmlichen Ausgleichsbohrungen einen größeren Querschnitt besitzen und somit einen ausreichenden Volumenstrom zur Pumpe ermöglichen. Des weiteren wird mit der geringen Breite der Schlitze 40 dem Bestreben nach möglichst kleinen Leerwegen in besonderer Weise Rechnung getragen. Die Schlitze 40 münden im Nutgrund 42 einer umlaufenden, mit flachen, schrägen Flanken versehenen Nut 41, so daß auch ohne eine sorgfältige Entgratung keine scharfen Kanten, die beim Einstechen der Schlitze 40 entstehen können und keine Gratkanten, die beim Austritt die beim Austritt des Fräswerkzeugs aus der Kolbenlauffläche entstehen können, zur Beschädigung der inneren Dichtlippe des Dichtelements 11 führen. Die Schlitze 40 können durch verschiedene Fertigungsverfahren wie z. B. Fräsen, Scheibenfräsen, Sägen oder durch exzentrisches Innen- oder Außendrehen eingebracht werden. Prinzipiell ist bei Kolben 13 aus höherfestem Werkstoff wie z. B. Stahl, bei dem eine dünnere Wandstärke möglich ist, auch ein Stanzen der Schlitze 40 denkbar.

## Patentansprüche

1. Geberzylinder insbesondere für eine hydraulische Kraftfahrzeugbremsanlage, in dessen Gehäuse (1) ein Druckraum (15) von einem beweglichen Kolben (13) begrenzt wird, der durch im Gehäuse (1) feststehend angeordnete Dichtelemente (11,12) sowohl gegenüber dem Druckraum (15) als auch einem Nachlaufraum (21) abgedichtet ist und einen oder mehrere Nachlaufkanäle (20,40) aufweist, der bzw. die in der zurückgestellten Position des Kolbens (13) eine Verbindung zwischen Druckraum (15) und Nachlaufraum (21) herstellen und diese Räume (15,21) in betätigter Kolbenstellung voneinander trennen, **dadurch gekennzeichnet, daß** als Nachlaufkanal (20) ein oder mehrere in Umfangrichtung des Kolbens (13) verlaufende Schlitze (40) vorgesehen sind.

2. Geberzylinder nach Anspruch 1, **dadurch gekennzeichnet, daß** die Schlitze (40) im Nutgrund (42) in der Außenfläche des Kolbens (13) umlaufende Nut (41) münden.

3. Geberzylinder nach Anspruch 2, **dadurch gekennzeichnet, daß** die umlaufende Nut (41) mit flachen Flanken (43) versehen ist.

4. Geberzylinder nach einem der vorhergehenden Ansprüche, **dadurch gekennzeichnet, daß** die Schlitze (40) bezüglich einer senkrecht auf der Kolbenachse stehenden Schnittfläche durch Stege (44) getrennt sind, deren Begrenzungslinien (45) zu den Schlitzen rund sind.

5. Geberzylinder nach einem der Ansprüche 1 bis 3, **dadurch gekennzeichnet, daß** die Schlitze (40) bezüglich einer senkrecht auf der Kolbenachse stehenden Schnittfläche durch Stege (44) getrennt sind, deren Begrenzungslinien (45') zu den Schlitzen (40) gerade sind.

6. Geberzylinder nach einem der Ansprüche 1 bis 5, **dadurch gekennzeichnet, daß** der Kolben (13) aus Metall besteht.

7. Geberzylinder nach einem der Ansprüche 1 bis 5, **dadurch gekennzeichnet, daß** der Kolben (13) aus Kunststoff besteht.

## Claims

1. Master cylinder, in particular for a hydraulic automotive vehicle brake system, having a housing (1) wherein a pressure chamber (15) is limited by a movable piston (13) that is sealed by sealing elements (11, 12), stationarily mounted in the housing (1), in relation to the pressure chamber (15) and a supply chamber (21), and the said piston includes one or more supply channels (20, 40) establishing, in the reset position of the piston (13), a connection between the pressure chamber (15) and the supply chamber (21), and separating the chambers (15, 21) from each other in the piston's actuated position,
**characterized in that** one or a plurality of slits (40) extending in the circumferential direction of the piston (13) are provided as a supply channel (20).

2. Master cylinder as claimed in claim 1,
**characterized in that** the slits (40) open into the groove bottom (42) of a circumferential groove (41) in the outside periphery of the piston (13).

3. Master cylinder as claimed in claim 2,
**characterized in that** the circumferential groove (41) includes flat flanks (43).

4. Master cylinder as claimed in any one of the preceding claims,
**characterized in that** the slits (40) are separated by webs (44) with respect to a cross-sectional surface which is vertical to the piston axis, and the boundary lines (45) of the webs in relation to the slits are round.

5. Master cylinder as claimed in any one of claims 1 to 3,
**characterized in that** the slits (40) are separated by webs (44) with respect to a cross-sectional surface which is vertical to the piston axis, and the boundary lines (45') of the webs in relation to the slits (40) are straight.

6. Master cylinder as claimed in any one of claims 1 to 5,
**characterized in that** the piston (13) is made of metal.

7. Master cylinder as claimed in any one of claims 1 to 5,
**characterized in that** the piston (13) is made of plastic.

## Revendications

1. Maître cylindre, notamment pour dispositif de freinage hydraulique pour véhicule automobile, dans le boîtier (1) duquel une chambre de pression (15) est délimitée par un piston (13) mobile dont l'étanchéité est assurée au moyen d'éléments d'étanchéité (11, 12), disposés d'une manière fixe dans le boîtier (1), aussi bien vis-à-vis de la chambre de pression (15) que d'une chambre de compensation (21) et comporte un ou plusieurs conduits de compensation (20, 40) qui, dans la position rappelée du piston (13), produisent une liaison entre la chambre de pression (15) et la chambre de compensation (21) et, dans la position actionnée du piston, séparent ces chambres (15, 21) l'une de l'autre, **caractérisé en ce qu'**en tant que conduit de compensation (20), il est prévu une ou plusieurs fentes (40) s'étendant suivant la direction circonférentielle du piston (13).

2. Maître cylindre suivant la revendication 1, **caractérisé en ce que** les fentes (40) débouchent, dans le fond de gorge (42), dans une gorge (41) faisant tout le tour de la surface extérieure du piston (13).

3. Maître cylindre suivant la revendication 2, **caractérisé en ce que** la gorge (41) faisant tout le tour est pourvue de flancs (43) plats.

4. Maître cylindre suivant l'une des revendications précédentes, **caractérisé en ce que** les fentes (40) sont séparées, relativement à une surface de coupe s'étendant perpendiculairement à l'axe du piston, par des parties pleines (44) dont les lignes (45) de limitation vis-à-vis des fentes ont une forme arrondie.

5. Maître cylindre suivant l'une des revendications 1 à 3, **caractérisé en ce que** les fentes (40) sont séparées, relativement à une surface de coupe s'étendant perpendiculairement à l'axe du piston, par des parties pleines (44) dont les lignes (45') de limitation vis-à-vis des fentes (40) ont une forme droite.

6. Maître cylindre suivant l'une des revendications 1 à 5, **caractérisé en ce que** le piston (13) est en métal.

7. Maître cylindre suivant l'une des revendications 1 à 5, **caractérisé en ce que** le piston (13) est en matière plastique.
